# EUROPEAN PATENT SPECIFICATION

(11) **EP 4 097 160 B1**
(45) Date of publication and mention of the grant of the patent: **06.03.2024**
(21) Application number: 21707775.9
(22) Date of filing: 26.01.2021
(51) Int. Cl.: C08G 18/28, C08G 18/38, C08G 18/62, C08G 18/79, C08G 18/80, C09D 175/04, C14C 11/00, C08G 18/08

(54) **MACROMOLECULAR COMPOUNDS AND USE THEREOF IN COMPOSITIONS**
MAKROMOLEKULARE VERBINDUNGEN UND IHRE VERWENDUNG IN ZUSAMMENSETZUNGEN
COMPOSÉS MACROMOLÉCULAIRES ET LEUR UTILISATION DANS DES COMPOSITIONS

(30) Priority: 27.01.2020 IT 202000001486; 16.07.2020 IT 202000017317
(43) Date of publication of application: 07.12.2022
(73) Proprietor: Italkem Srl, 20124 Milano (IT)
(72) Inventor: TOMASSONE, Mauro Serafino, 20124 Milano (IT)
(74) Representative: Fisauli, Beatrice A. M.
(86) International application number: PCT/IB2021/050582
(87) International publication number: WO 2021/152453

(56) References cited:
- EP-A1- 2 727 949
- WO-A1-2020/020714
- JP-A- H07 304 867
- US-A- 3 267 077

## Description

The present invention relates to a new macromolecular, in particular functionalized oligomeric, compound and to a new composition comprising said functionalized oligomeric compound. Moreover, the present invention concerns a process for producing said new compound and said new composition.

Both said compound and said composition can be used as cross-linking agents to produce articles in various sectors. Therefore, the present invention also relates to their use in a production process of said articles.

In detail, the cross-linking compound according to the present invention can be used in the manufacture of articles, mainly made of leather or imitation leather, textile material and wood, which are useful in many sectors. Therefore, the main industries concerned are those in the automobile, furnishing, clothing and footwear and giftware sector, to produce, for example, footwear and accessories (such as belts, wallets, bags, luggage, etc.), items of clothing (such as jackets, gloves, hats, etc.), as well as upholstery, coverings and coatings, including wood coatings, for example for furniture, floors, doors, vehicles, etc.

Within the scope of the present description, hereinafter the term "leather" is meant both as genuine leather and as artificial leather or leatherette, which are, for example, made of polyurethane material.

In general, it is known that the production of said articles can require a final treatment, the finishing step, to give the finished article particular characteristics and surface effects, both for aesthetic and functional purposes.

In this step, the product is treated with polymers, typically polyurethane and polyacrylates. In this step the polymers are cross-linked to improve the desired properties of the final article. The cross-linking compound according to the present invention is to be used mainly during said finishing step of a production process of said articles.

It is known that cross-linking agents are chemical substances with functional groups capable of interacting with the polymer chains; more in particular, said functional groups react with the free functional groups available along the chain of the individual polymer units, so as to create a mesh of polymer chains. The mesh thus formed determines, once the film has dried, a three-dimensional structure.

Cross-linking gives the product a more solid three-dimensional structure, and gives the final article characteristics of greater stability and strength, which translate into an improved stability and strength of the medium treated (e.g., leather, fabric), i.e., a better quality of the finished article. In general, the chemical products normally used for finishing treatments are often toxic and/or harmful for the environment. This is also true for the cross-linking substances most widely used in the leather and textile sector, which belong to three different classes of chemical products, namely polyaziridines, polyisocyanates and polyureas. Said products have different characteristics, costs, activity types and specific uses to one another. In detail, polyaziridines are the most advantageous in terms of cost-effectiveness; in fact, they have characteristics of stability and resistance of grade 4-5 and rapid reaction times (24 hours). These cross-linking substances are mainly used for cross-linking the outer layer (known as top coat, i.e., the protective outer layer of the finished article, such as a car seat), as very sturdy and resistant films are produced, which allow high quality articles to be obtained. However, they have various problems: primarily, they have a very high impact on health/the environment as they are hazardous and also a short pot life, of less than 24 hours, of the solution prepared.

To cross-link intermediate and top coats polyisocyanates are also normally used, which in terms of quality are not as good as polyaziridines, but have the advantage of being much less costly than the latter. However, they have various problems.

Firstly, just as polyaziridines, polyisocyanates also have a short pot life of the solution, i.e., no more than 24 hours, and consequently after this period of time the polyisocyanate solution is no longer suitable for use.

Moreover, polyisocyanates have a very long reaction time, of around 5 days (compared to a time of around 24 hours of polyaziridines); this is a problem as it considerably increases the time of the production process of a product and, consequently, also its production costs. Finally, polyisocyanates are damaging to the health of living beings, in particular they are harmful for human beings. Moreover, as a result of these negative effects, since 2019 there have been restrictions on their use, due to the residual presence (≤0.1%) of isocyanate monomers (e.g. MDI and HDI).

Known emulsifiable polyisocyantes as curing agents comprised in an aqueous composition for leather are disclosed in patent document EP 2727 949 A1. Azridine-modified polyisocyanates including isocyanurate oligomers are also known as curing agents as disclosed in patent documents US 3 267 077 A, JP H07 304867 A and WO 2020/020714 A1.

With regard to polyureas, these are less costly, but also less effective, substances than the cross-linking agents previously mentioned and have numerous other problems; for example, they are also harmful for humans and polluting for the environment, so much so that numerous precautions are required for their transport.

Moreover, a further important problem of polyureas concerns their dispersion stability: dispersion is only stable around room temperature (i.e., from +5° to +35° C), which means that polyurea dispersions require measures to be taken to avoid degradation, i.e., they must be stored in temperature controlled environments and/or in containers that preserve their integrity, and hence their functionality.

Furthermore, polyureas have a colour stability and lightfastness of grade 1 or 2; due to these low values, polyureas can only be used in the intermediate and/or lower layers of a product, and only for dark shades.

Finally, polyureas require long reaction times, i.e., of around 5 days (the same as polyisocyanates).

Due to the problems of said cross-linking substances, there is the need for a cross-linking compound that can at least partially solve said problems, but that has the same cross-linking efficacy, so as to allow use in the same field of application as the previously mentioned cross-linking substances.

A new compound that is capable of cross-linking polymers, in particular those mentioned above, has surprisingly been found. Moreover, this compound has a more favourable overall balance, both of properties *per se* and/or as balance of properties in relation to environmental costs and/or health, compared to the aforesaid known cross-linking substances.

The balance of properties concerns, in particular, performance in terms of heat tolerance, reaction time speed, pot life, colour stability and lightfastness, and in terms of danger to human health and risk of environmental pollution.

Even more in particular, with reference to the colour of the finished product, the cross-linking compound according to the present invention can be used for leather or artificial leather finishings with a wide range of colours, even for very light coloured, or even white, leather products, due to the grade 5 chromatic stability of the compound according to the present invention, and contrary to the other cross-linking agents (in particular polyureas), which are sensitive to UV rays and therefore cannot be used for the surface layer of a finished product.

Moreover, the cross-linking compound according to the present invention has a pot life of up to 60 hours, compared to the considerably lower times of around 24-48 ore of cross-linking compounds currently on the market, which consequently have a shorter pot life. Furthermore, the cross-linking compound according to the present invention has a much shorter reaction time, less than a quarter, i.e. around 24 hours, compared to the 5 days required for known cross-linking substances such as polyisocyanates and polyureas. Finally, the cross-linking compound according to the present invention is stable up to a temperature of 60° C; therefore, said compound can be shipped and stored in warehouses at any latitude without having to take particular measures for its refrigeration, as required for some of the substances currently used, such as polyureas, for example through the use of refrigerated containers, reducing the costs required for the purchase of suitable containers by around one third. These properties also affect the costs of storage, transport and logistics of the cross-linking compound according to the present invention, which are consequently lower compared to those of the corresponding substances currently used.

Therefore, the subject matter of the present invention is a functionalized oligomeric compound C having the following general structural formula (I): 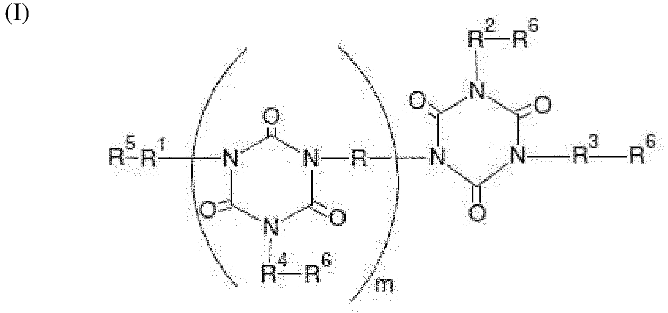 wherein:
- the radicals R, R¹, R², R³ and R⁴ are the same as or different from one another, and are an alkylene group C₁-C₁₀. preferably C₅-C₈, wherein the alkylene is preferably a linear chain;
- the radical R⁵ is a -NH-CO-OR-(CH₂-CH₂-OR)ₙ-R⁷ group, wherein the radical -OR-(CH₂-CH₂-OR)ₙ-R⁷ is a radical of the alkyl monoether of polyethylene glycol (PEG) wherein R⁷ is a C₁-C₈, preferably C₁-C₅, alkyl chain of the alkyl monoether and n is an integer from 2 to 22, preferably from 6 to 18, more preferably from 8 to 17;
- the radical R⁶ is a group selected from (a) an isocyanate radical (-NCO), (b) said radical R⁵, typically hydrophilic, and (c) a group with an aziridine radical of general structural formula (II): 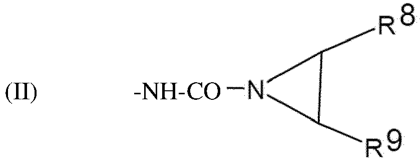 wherein the radicals R⁸ and R⁹ can be the same as or different from one another and are selected from H and a linear or branched C₁-C₄ alkyl radical, and
- m is an integer selected from 0 to 5, preferably from 0 to 2.

Preferably, in said compound C there are at least two radicals R⁶ comprising a radical of general structural formula (II).

It must be noted that said compound C comprises at least one portion E having at least one heterocyclic structure with hexatomic ring with three nitrogen atoms, N,N',N"-substituted, i.e., an isocyanate trimer, also known as isocyanurate, substituted (or 1,3,5-trisubstituted-1 ,3,5-triazene-2,4,6(*1H,3H,5H*)-trione).

Said isocyanurate has the following general structural formula (III): 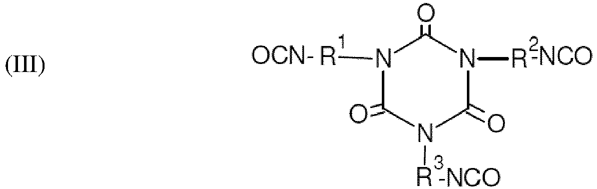 wherein R¹, R² and R³ have the meanings mentioned above.

Said (III) N,N',N"-substituted isocyanurate can be obtained, for example, by means of a cyclization process of three molecules of C₁-C₁₀-α,ω-alkylene diisocyanate, according to the prior art in the presence of suitable catalysts.

However, if in the cyclization condensation process a molecule of C₁-C₁₀-α,ω-alkylene diisocyanate reacts with the reaction product already formed, for example, isocyanurate, polycyclic compounds with two, three or even more substituted hexatomic heterocyclic rings are produced, giving rise to a compound of said general formula (I) where m is equal to or greater than 1.

The portion E of the compound C can therefore have a plurality, typically two, three or more, isocyanurates of general formula (III).

In detail, when m is 0, the compound C is a trimer of the C₁-C₁₀-α,ω-alkylene diisocyanate, when m is 1, the compound C is a pentameric derivative of C₁-C₁₀-α,ω-alkylene diisocyanate and when m is 2, the compound C is a heptameric derivative of C₁-C₁₀-α,ω-alkylene diisocyanate, and so forth.

In said compound C, the portion E is functionalized with at least one radical of said alkyl monoether of PEG. Said portion E functionalized with this group allows the compound C to be at least partially soluble in water.

Preferably, in this compound C the radicals R-R⁴ are the same as one another, or the compound C is obtained by reaction of alkylene diisocyanurate monomers the same as one another.

Preferably said radical R⁶ is a group with a monosubstituted aziridine radical, more preferably in this monosubstituted radical R⁸ is -CH₃ and R⁹ is -H, or vice versa. Moreover, preferably the radical R⁷ is a linear C₁-C₈ alkyl chain.

Preferably, the compound C has a number of R⁶ groups ranging from a minimum of 2 to 17. Typically, the compound C can comprise more than two groups having general formula (II), for example 3, 4, 5 or more, according to the value of m.

Typically, the derivative of the polyethylene glycol present in the formula (I) is a macromolecule having a weighted average molecular weight (Mw) from 100 to 1000, preferably from 300 to 800, more preferably from 350 to 750 g/mol.

In practice, the oligomeric compound C is a set of oligomers with a different degree of oligomerization as a function of the degrees of condensation of the derivative of α,ω-alkylene diisocyanate. Therefore, in the description below, reference will be made to the compound C, it being understood that it is a set of compounds having different degrees of condensation of the molecules of α,ω-alkylene diisocyanate and optionally with different radicals R⁵-R⁹ from oligomer to oligomer.

More in particular, generally the compound C is mainly in the form of trimer; in fact, this oligomer is in a larger relative amount with respect to the other oligomeric forms.

In detail, the trimer is typically present in an amount from 40 to 70%, preferably from 45 to 60%, by weight with respect to the total weight of the oligomeric forms.

The further oligomeric forms are generally the pentamer and the heptamer, which are generally in an amount, respectively, from 5 to 45%, typically from 10 to 40%, by weight and from 2 to 20%, typically from 5 to 18%, by weight with respect to the total weight of the oligomers.

The compound C can also be in the form of oligomers with a higher oligomerization number with respect to those mentioned above. If present, these oligomers are in modest amounts, typically no higher than 5% in total.

The compound C according to the present invention is typically a solid at room temperature. Said compound C has the following weight values:
- number average molecular weight (Mn) generally from 2,500 to 4,500, preferably from 2,800 to 4,300, determined by GPC, in the conditions set forth below;
- weighted average molecular weight (Mw) generally from 3,000 to 5,500, preferably from 3,500 to 5,000, determined by GPC, in the conditions set forth below.

The compound C according to the present invention has a hydrophilic portion, typically this is the portion of the polyethylene glycol.

Another object of the present invention concerns a process for producing said compound C. Said process comprises at least one reaction (I) from the following reagents:
a) an aziridine, substituted or non-substituted, as defined above, and
b) an oligomer of a N,N',N"-trialkyl-isocyanurate functionalized with said hydrophilic group.

The reaction (I) is conducted, typically, using a molar ratio between reagents (a) and (b) in the range from 0.5:2 to 2:0.5, preferably from 0.8:1.5 to 1.5:0.8, more preferably from 0.9:1.2 to 1.2:0.9.

Moreover, the temperature at which the reaction (I) is conducted is from +20 to +60 °C, preferably +30 to +50 °C.

The reaction (I) is conducted in the presence of a polar organic solvent. Examples of said solvents that can be used are: acetone, dichloromethane, propylene carbonate and a glycol dialkyl mono-alkyl ether. In particular, glycol ethers are selected from linear dialkylene glycol alkyl ethers, wherein the alkyl chains are linear and have from 1 to 10 carbon atoms. A specific example is methoxypropoxy propane.

In this reaction, the solvent is in an amount by weight indicatively from 10%, preferably 15%, up to 50%, preferably 45%, of the amount by weight of the total of the aforesaid reagents.

Said reaction (I) produces said compound C having the aforesaid general structural formula (I). Therefore, at the end of said reaction (I) a blend M is obtained comprising the compound C, in its aforesaid oligomeric forms, the solvent used to conduct the reaction (I) and optionally small amounts of other components, such as reagents or reaction by-products. For example, this blend M can contain a residue of unreacted aziridine, hence as free monomer. If present, these further components are present in a maximum amount of 2%, typically up to 1.5%, by weight with respect to the weight of the whole blend. If present, the unreacted aziridine is typically in a maximum amount of 20 ppm.

For the purposes of the present invention, typically, said blend M comprises said components in the following amounts (percentages by weight):
I) from 55 to 90, preferably from 60 to 85, more preferably from 65 to 80, of said oligomeric compound C,
II) from 10 to 45, preferably from 15 to 40, more preferably from 20 to 35, of said polar solvent, and optionally
III) from 0 to 2 of reagents and/or reaction by-products, as indicated above. Another object of the present invention concerns a use of said compound C and, more in particular, of said blend M, as cross-linking agent for producing articles in various sectors, as indicated above.

As mentioned previously, the final step of the production of articles made of the aforesaid materials includes a finishing treatment carried out on the face of an article to be finished and conducted with a finishing composition.

This treatment allows, for example, improvement of the appearance of the face of said article and/or said finished article to be given a specific property, such as rub resistance, resistance to flexing, and also lightfastness. In fact, it may be desirable to give an article a greater rub resistance for a specific hygrometric condition, i.e., a damp or dry environment, or to combat the phenomenon of colour fading.

The finishing treatments and the finishing compositions are known *per se* and therefore shall not be described in detail.

More precisely, according to an embodiment, a finishing treatment can be carried out by applying to the surface of the article to be finished two or more substances, usually in the form of a composition F that comprises at least two thereof, required to obtain the desired properties. The present invention refers to finishing compositions according to the prior art. This composition F generally comprises a polymer, a cross-linking agent, pigments, auxiliary agents and optionally at least one further component that depends on various factors, such as the type of material of which the article, in particular the face thereof to be finished, is made.

According to the prior art, a finishing coat (which can consist of one or more layers) with a finishing composition (hereinafter indicated as composition F) is applied to the face to be treated.

According to the finishing technique used, the application of this finishing coat generally also includes the application, on the face to be treated, of:
- a base coat (which can consist of one or more layers), i.e., a base composition is applied to the face to be treated before applying the finishing composition, or
- a top coat (which can consist of one or more layers), i.e., a coating composition is applied over the finishing composition already applied to the face of the article.

As mentioned previously, and taught by the technique used, the finishing composition comprises a cross-linking agent.

Therefore, another object of the present invention is a finishing composition comprising said compound C, i.e., said blend M, according to the present invention as cross-linking agent. Therefore, said compound C, i.e., said blend M, can be used in substitution of the cross-linking agents of the prior art in said finishing composition.

The composition F comprises said blend M in variable concentration, generally from 0.1 to 10%, preferably from 0.2 to 9%, more preferably from 0.3 to 8%, by weight, percentages of the blend M referring to 100 parts of resin present in the composition F.

For example, the composition F comprises said blend M in variable concentration, generally from 0.06, preferably at least 0.07, more preferably 0.1, even more preferably from 0.2, more preferably from 0.3 to 10%, preferably 9%, more preferably 8%, by weight with respect to the weight of the whole composition F.

Consequently, in general, said composition F comprises the compound C in variable concentration, generally from 0.05, preferably from 0.055 to 9%, more preferably from 0.12 to 7.65%, even more preferably from 0.195 to 6.4%, by weight with respect to the weight of the whole composition F.

In particular, said composition F has an amount of compound C that generally depends both on the type of material of the article to be finished and on the type of finishing technique used.

As mentioned previously, in one case, application of the finishing composition can be preceded by the application of a base coat or, in another case, alternatively, if this does not occur, the finishing composition is applied directly to the face to be finished and, subsequently to its application, a top coat is applied thereto.

Therefore, for example, in the first case mentioned, the composition F comprises the blend M in an amount that generally varies from 0.1% to 10%, preferably from 0.2% to 9%, more preferably from 0.35% to 8%, by weight, percentages of the blend M referring to 100 parts of resin present in the composition F.

For example, the composition F comprises said blend M in variable concentration, generally from 0.06, preferably at least 0.07, more preferably 0.1, even more preferably from 0.2, more preferably from 0.3 to 10%, preferably 9%, more preferably 8%, by weight with respect to the weight of the whole composition F.

In the second case mentioned, the composition F comprises the blend M in a amount that varies, preferably from 0.1% to 9%, more preferably from 0.1% to 8%, even more preferably from 0.2% to 6%, by weight, percentages of the blend M referring to 100 parts of resin present in the composition F.

For example, the composition F comprises said blend M in variable concentration, generally from 0.06, preferably at least 0.07, more preferably 0.1, even more preferably from 0.2, more preferably from 0.3 to 9%, preferably 8%, more preferably 6%, by weight with respect to the weight of the whole composition F.

The finishing composition F according to the present invention is prepared according to prior art processes.

Generally, the finishing composition is prepared by mixing all the components required, which, during the preparation process, are added to the first component, usually the polymer to be cross-linked, one at a time.

The mixing process takes place, preferably, by adding the components to the solvent one at a time, the last component to be added is the cross-linking agent according to the present invention, i.e., said blend M.

Typically, this process is carried out at room temperature.

As mentioned previously, the method of applying the finishing composition according to the present invention is a known method. Typically, the finishing treatment consists of spraying or depositing the finishing composition on the surface of interest of the product to be treated, forming at least one uniform layer of finishing composition on said surface. The finishing composition is applied, for example, with a spray gun using compressed air, or with roller machines or curtain coater machines.

An example of the present invention, provided for non-limiting illustrative purposes, is provided below.

### Materials and methods:

- Reagents:
- reagent (A): trimers of hexamethylene-α,ω-diisocyanate (HDI) functionalized with methoxypolyethylene glycol (MPEG). Some properties of said reagent (A) are indicated in the Table A below; and
- reagent (B): 2-methylaziridine, having a purity of 98% by weight (determined via gas chromatography).

**Table A**

| Properties of HDI | value | method |
|---|---|---|
| Content of NCO groups (by weight) | 17.4 ±0.5 % | DIN EN ISO 11 909 |
| Viscosity at 23 °C | 2800±800 mPa·s | DIN EN ISO 3219/A.3 |
| Viscosity at 25 °C | ca. 2500 mPa·s | DIN EN ISO 3219/A.3 |
| Colour evaluation | ≤ 60 | DIN EN 1557 |
| Monomer residue (by weight) | ≤ 0.15% | DIN EN ISO 10 283 |
| Equivalent weight | ca. 241 | |
| Density at 20 °C | ca. 1.16 g/ml | DIN EN ISO 2811 |
| Flash point | >250 °C | DIN EN 22719 |

- Spraying method: spraying is carried out with a spray gun using compressed air (at a pressure of 3 bar), in a ventilated chamber. The product is applied according to the known technique of cross strokes (i.e. directing the spray alternately horizontally, vertically and diagonally until the face to be treated is completely coated with a layer of composition) to obtain a layer that is as homogeneous and uniform as possible. If several layers are to be formed, application is repeated until obtaining the number of layers required. The spray gun is adjustable so that only the desired amount of composition to be sprayed is deposited on the face of the sample.
- The tests conducted on the samples after the finishing treatment are as follows:
- resistance to repeated flexing with the Giuliani FL 02 and 05 model G12/D flexometer, according to the method ISO 5402-1, tests carried out at room temperature;
- Veslic test in wet conditions and alcohol rub test using the Giuliani apparatus VE 05 and VE 06 VESLIC IG/10/MOD, according to the method UNI EN ISO 11640 to evaluate the rub resistance of the finishing film;
- accelerated aging test using the Xenotest instrument Q-SUN XE-2, according to the method ISO 105 B06, and a model Daylight UV 01 lamp; and
- colorimetric determination: carried out with the Spectra apparatus model SP 12 DATACOLOR 110 Sav Drawer.

### Example 1

### Preparation of the final product

The reagent (A) is placed in a four-necked flask with a capacity of 3,000 ml equipped with a magnetic stirrer in an amount of 233.33 followed by 124.5 g of solvent, namely methoxy propoxy propanol. The reagent (B), namely 57.1 g of 2-methylaziridine, is then added to the flask while maintaining the solvent under stirring; this addition is slow and is completed over the course of 2 hours. During this addition, the temperature is kept under control, if necessary in an ice bath, so as not to exceed 40 °C. After adding the reagent (B), stirring continues for 4 hours keeping the temperature around 40 °C. At the end of the reaction (I), as per diagram 1, the resulting mixture of components is subjected to high vacuum distillation with a vacuum pump for 4 hours to remove the unreacted reagent (B). After distillation, 413 g of a colourless oily liquid (I) containing 70% by weight of reaction product (I) is obtained; the remaining 30% by weight is the solvent. The reaction yield (I) is 99%. However, this liquid (I) still has traces of unreacted aziridine, in an amount not exceeding 10 ppm.

At the end of this step, a blend M comprising 30% by weight of solvent and 70% by weight of oligomeric compound C is obtained. The oligomeric compound C is divided as follows (percentages by weight with respect to the whole blend M):
- 37.8% of compound C in the form of trimer,
- 24.5% of compound C in the form of pentamer,
- 7.7% of compound C in the form of heptamer.

Said percentages were determined using the GPC method.

### Diagram 1 of the reaction (I)

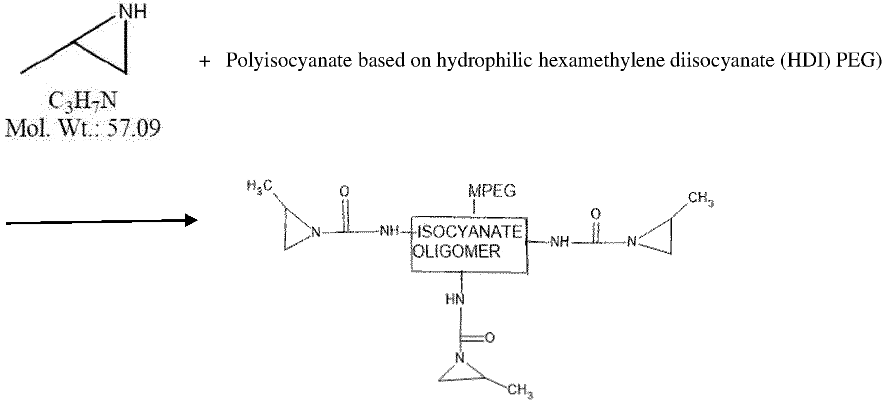

### Polyisocyanate based on hydrophilic hexamethylene diisocyanate (HDI) (MPEG) ISOCYANATE OLIGOMER

### Examples 2-6 and comparative examples 1c-5c

### Preparation of finishing compositions F for a finishing treatment

Finishing compositions F are prepared by adding the cross-linked resin to a beaker equipped with magnetic stirrer followed, and maintaining the composition under stirring, by the following ingredients if present: water, auxiliary agents and, finally, the cross-linking agent. Said ingredients are added one at a time and in the order indicated above.

The subsequent ingredient is added only when the previous ingredient has been completely blended.

This blending takes place under pressure and at room temperature.

The aqueous compositions F prepared comprised the following components (percentages by weight):
- 14% of polyurethane resin,
- cross-linking agent, present as blend M produced in example 1 or prior art agents, and
- 3% of auxiliary agents.

The type of di cross-linking agent (which is the blend M according to the present invention obtained in example 1 or a prior art agent) and the amount thereof for 100 parts by weight of resin present in each composition F prepared are indicated in Table B.

**Table B**

| Composition F | Cross-linking agent | | |
|---|---|---|---|
| | type | amount (parts by weight) | |
| | | ¹⁾ | ²⁾ |
| I | blend M | 0.07 | 0.5 |
| II | blend M | 0.14 | 1.0 |
| III | blend M | 0.28 | 2.0 |
| IV | blend M | 0.42 | 3.0 |
| V | blend M | 0.7 | 5.0 |
| Ic | - | 0 | 0 |
| IIc | blend with 70% of polyisocyanate | 0.7 | 5.0 |
| IIIc | polyaziridine 100% | 0.14 | 1.0 |
| IVc | polyaziridine 100% | 0.28 | 2.0 |
| Vc | polyaziridine 100% | 0.7 | 5.0 |

| | | | |
|---|---|---|---|
| ¹⁾ Amount of cross-linking agent present in the composition F. ²⁾ Amount of cross-linking agent taken to 100 parts by weight of resin in the composition F. | | | |

### Examples 7-11 and comparative examples 6c-10c

### Preparation of an article by means of finishing of embossed leather

### Stage 1): Formation of the base coat

A battery of 10 samples (each of dimensions 20x30 cm) made of embossed leather is treated with a composition SF to form a base coat on the embossed face of each of said 10 samples. The composition SF is indicated in Table C below.

**Table C - Composition SF**

| Component | % by weight |
|---|---|
| polyurethane resins | 16 |
| black pigments | 3 |
| cross-linking agent based on polyaziridine | 1 |
| auxiliary agents (such as waxes, oils, dispersants, etc.) | 4 |
| water | 76 |

With an air gun equipped with spray nozzle said composition SF is sprayed onto one face of each sample according to the spraying technique using cross strokes and the operation is then repeated on the same face of the sample, so that a second layer is formed. The amount of composition SF sprayed for each layer is equal to around 2.5 g/1000 cm². The spraying treatments are carried out at room temperature.

After the second layer has been formed, the sample is dried for 2 minutes at 105°C.

### Stage 2): Formation of the finishing coat

Each of the 10 samples with the face coated with said base coat is treated for the finishing treatment of the leather with one of the finishing compositions F I-V and Ic-Vc illustrated previously and containing the cross-linking agent according to the present invention or of the prior art or without this agent. The compositions F used in these examples contain polyurethanes as resin.

The composition F is sprayed according to the spraying technique using cross strokes. The amount of composition F sprayed to form the finishing coat is equal to around 1.6 g/1000 cm². The spraying treatment is carried out at room temperature.

After the second layer has been formed, the sample is dried for 2 minutes at 105°C.

The sample of leather thus finished is left to rest at room temperature (i.e., around 20°C) for 120 hours and then undergoes tests to evaluate its characteristics.

In particular, the Veslic test was conducted on the samples of leather finished with the compositions indicated in Table B to evaluate the rub resistance of the finishing film. The results obtained are indicated in Table 1 below.

**Table 1**

| Example | Composition F | Wet Veslic Test | | |
|---|---|---|---|---|
| | | cycles | appearance¹⁾ | Grey scale of the felt²⁾ |
| 7 | I (blend M, 0.5%) | 400 | LIM KO | 3 |
| 8 | II (blend M, 1% p/p) | 500 | LIM KO | 3/4 |
| 9 | III (blend M, 2% p/p) | 600 | OK | 3/4 |
| 10 | IV (blend M, 3% p/p) | 900 | OK- | 4 |
| 11 | V (blend M, 5% p/p) | 1100 | OK- | 4 |
| 6c | Ic (standard) | 100 | LIM KO | 3/4 |
| 7c | IIc (Polyisocyanate, 5% p/p) | 500 | LIM OK | 3/4 |
| 8c | IIIc (Polyaziridine, 1% p/p) | 150 | LIM KO | 3/4 |
| 9c | IVc (Polyaziridine, 2% p/p) | 600 | LIM OK | 3/4 |
| 10c | Vc (Polyaziridine, 5% p/p) | 1000 | LIM KO | 3-3/4 |

| | | | | |
|---|---|---|---|---|
| ¹⁾ Veslic evaluation scale from worst to best: KO, LIM KO, LIM OK, OK. ²⁾ The higher the scale number, the smaller the colour variation. | | | | |

The results of the test on the various samples show that the samples treated with the finishing compositions F containing the cross-linking compound according to the present invention have a rub resistance equal to, or greater than, the samples treated with finishing compositions containing prior art cross-linking agents or without cross-linking agents (standard).

The resistance to repeated flexing, accelerated aging and colorimetric determination tests on said examples produced with finishing compositions according to the invention give results that are substantially comparable to the results obtained on said comparative examples (i.e., with finishing compositions containing said cross-linking agents of the prior art), and in some cases said results are even better (even with a smaller amount of cross-linking agent).

### Examples 12-14 and comparative examples 11c- 14c

The example 7 is repeated on a battery of 7 samples, but with the differences indicated below. Stage 1): the face of each sample is treated 4 times with a base composition SF (composition that forms a base coat), so as to form 4 superimposed homogeneous layers; the sprayed aqueous composition F has a general composition as indicated in Table D below.

**Table D - Composition SF**

| Component | % by weight |
|---|---|
| polyacrylic resins | 16 |
| white pigments | 3 |
| cross-linking agent¹⁾ | 0.5-3 |
| auxiliary agents (such as waxes, oils, dispersants, etc.) | 4 |
| water | 74-76.5 |

| | |
|---|---|
| ¹⁾The type and/or the amount of cross-linking agent varies for each composition F prepared. The compositions F used in these examples and comparative examples are set down in Table E below, which specifies the type of cross-linking agent (which is the blend M according to the present invention obtained in example 1 or a prior art agent), if present, and its amount per 100 parts by weight of resin present in each composition F prepared. | |

**Table E - Cross-linking agent in the compositions F**

| Example | Cross-linking agent | | |
|---|---|---|---|
| | type | amount (parts by weight) | |
| | | ¹⁾ | ²⁾ |
| 12 | blend M | 0.08 | 0.5 |
| 13 | blend M | 0.16 | 1.0 |
| 14 | blend M | 0.48 | 3.0 |
| 11c | - | 0 | 0 |
| 12c | blend with 70% of polyisocyanate | 0.8 | 5.0 |
| 13c | blend with 80% of polyisocyanate | 0.7 | 4.375 |
| 14c | blend with 27% of polyurea | 0.16 | 1.0 |

| | | | |
|---|---|---|---|
| ¹⁾ Amount of cross-linking agent present in the composition F. ²⁾ Amount of cross-linking agent taken to 100 parts by weight of resin in the composition F. | | | |

Stage 2): the face of the sample, coated with 4 coats of finishing composition as base coat in stage (1), is treated with a coating composition with the composition indicated in Table F below.

**Table F**

| Component | % by weight |
|---|---|
| polyacrylic resin | 14 |
| cross-linking agent based on polyaziridine | 1 |
| auxiliary agents (such as waxes, oils, dispersants, etc.) | 3 |
| water | 82 |

After obtaining the samples of leather finished with the coating compositions indicated in Table F, tests are conducted to evaluate the rub resistance of the coating film; some of the results obtained are indicated in Table 2 below.

**Table 2**

| Example | | Composition F | Wet Veslic Test | | |
|---|---|---|---|---|---|
| | | | cycles | appearance¹⁾ | Grey scale of the felt²⁾ |
| 12 | | I (blend M, 0.5%) | 400 | LIM OK | 3/4 |
| 13 | | III (blend M, 2% p/p) | 550 | LIM OK | 3-3/4 |
| 14 | | V (blend M, 5% p/p) | 700 | OK- | 3-3/4 |
| 11c | | Ic (standard) | 250 | LIM OK | 2/3 |
| 12c | a | IIc (Polyisocyanate, 5% p/p) | 500 | LIM OK | 3/4 |
| | b | | 600 | LIM OK | 3 |
| 13c | | IIIc (Polyaziridine, 1% p/p) | 350 | LIM OK | 3 |
| 14c | | IVc (Polyaziridine, 2% p/p) | 600 | LIM KO | 3/4 |

| | | | | | |
|---|---|---|---|---|---|
| ¹⁾ Veslic evaluation scale from worst to best: KO, LIM KO, LIM OK, OK. ²⁾ The higher the scale number, the smaller the colour variation. | | | | | |

The results of the test on the samples with polyacrylic resins also show that the samples treated with the compositions containing the cross-linking compound according to the present invention have a rub resistance equal to, or greater than, the samples treated with finishing compositions containing prior art cross-linking agents or without cross-linking agents (standard).

The resistance to repeated flexing, accelerated aging and colorimetric determination tests conducted on the samples of examples 12-14 give results that are substantially comparable to the results obtained on the examples of the relevant comparative examples (i.e., with finishing compositions containing said cross-linking agents of the prior art), and in some cases said results are even better (even with a smaller amount of cross-linking agent).

## Claims

1. A functionalized oligomeric compound C having the following general structural formula (I): 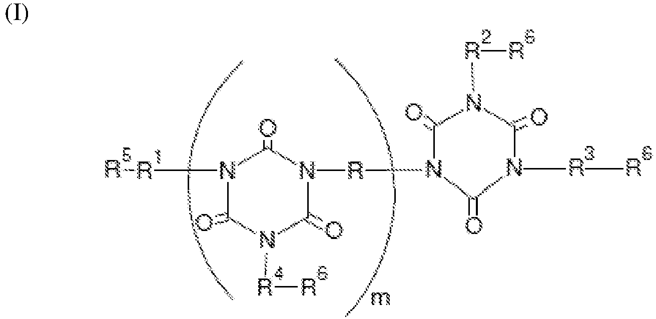 wherein:
- the radicals R, R¹, R², R³ and R⁴ are the same as or different from one another, and are a C₁-C₁₀ alkylene group, preferably C₅-C₈, the alkylene is preferably a linear chain;
- the radical R⁵ is a NH-CO-O-(CH₂-CH₂-O)ₙ-R⁷ group, wherein the -O-(CH₂-CH₂-O)ₙ-R⁷ radical is a radical of the alkyl monoether of polyethylene glycol (PEG) wherein R⁷ is a C₁-C₈ alkyl chain of the alkyl monoether and n is an integer from 2 to 22;
- m is an integer selected from 0 to 5 and
- the radical R⁶ is a selected from (a) an isocyanate radical (-NCO), (b) said radical R⁵ and (c) a group of general structural formula (II): 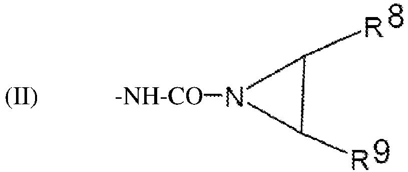
wherein the radicals R⁸ and R⁹ can be the same as or different from one another and are selected from H and a linear or branched C₁-C₄ alkyl radical;
in said compound C there are at least two radicals R⁶, each comprising a radical of general structural formula (II).

2. The oligomeric compound C according to claim 1, wherein any one of the radicals R⁸ and R⁹ is H and the other radical from R⁸ to R⁹ is CH₃.

3. The compound C according to claim 1 or 2, wherein the radicals R, R¹, R², R³ and R⁴ are the same as one another and are a -(CH₂)₆- radical.

4. The compound C according to any one of the preceding claims, wherein R⁷ present in the radical R⁵ is a C₁-C₅ alkyl chain.

5. The oligomeric compound C according to any one of the preceding claims, wherein said compound C is in the form of a blend of oligomers including the isocyanate trimer of the alkylene C₁-C₁₀-α,ω-diisocyanate, said trimer being present in an amount from 40 to 70% by weight with respect to the entire blend of oligomers.

6. A process for producing the compound C according to any one of the preceding claims, comprising at least the following reaction (I) from the following reagents:
a) an aziridine, substituted or non-substituted, as defined above, and
b) an oligomer of a N,N',N"-trialkyl-isocyanurate functionalized with said hydrophilic group;
said reaction (I) being conducted in the presence of a polar organic solvent and at a temperature from +20 to +60 °C.

7. The process according to the preceding claim, wherein the reaction (I) is conducted using a molar ratio between reagents (a) and (b) in the range from 0.5:2 to 2:0.5.

8. The process according to any one of the preceding claims 6 and 7, wherein the solvent is in an amount by weight from 10% to 50% of the amount by weight of the total of the aforesaid reagents.

9. A blend M obtained according to any one of the preceding claims 6-8 for use in a treatment for finishing leather or imitation leather, textile material and wood, said blend comprising the following components in the following amounts (percentages by weight):
I) from 55 to 90, preferably from 85 to 60, more preferably from 65 to 80, of said oligomeric compound C.
II) from 10 to 45, preferably from 15 to 40, more preferably from 20 to 35, of said polar solvent, and optionally
III) from 0 to 2 of reagents and/or reaction sub-products.

10. A finishing composition F for leather or imitation leather, textile material and wood, wherein the oligomeric compound C is in amount from 0.05 to 9% by weight with respect to the weight of said finishing composition.

## Patentansprüche

1. Eine funktionalisierte oligomerische Verbindung C mit der folgenden allgemeinen Strukturformel (I): 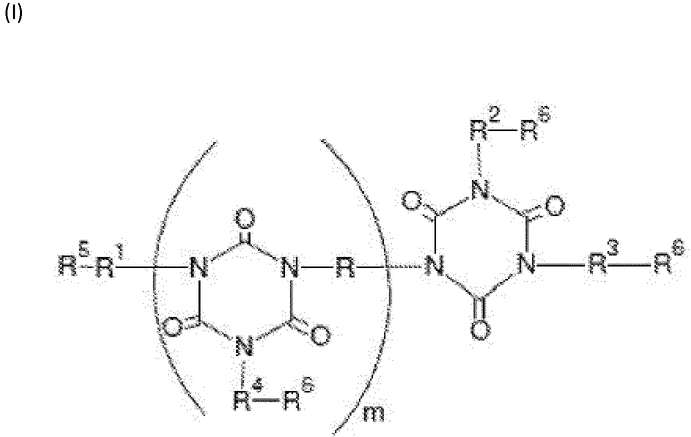 wobei:
- die Radikale R, R¹, R², R³ und R⁴ gleich oder verschieden voneinander sind, und eine C₁-C₁₀-Alkylengruppe sind, vorzugsweise C₅-C₈, wobei das Alkylen vorzugsweise eine lineare Kette ist;
- das Radikal R⁵ eine NH-CO-O-(CH₂-CH₂-O)ₙ-R⁷-Gruppe ist, worin das Radikal -O-(CH₂-CH₂-O)ₙ-R⁷ ein Radikal des Alkylmonoethers von Polyethyleneglykol (PEG) ist, worin R⁷ eine C₁-C₈-Alkylkette des Alkylmonoethers ist und n eine ganze Zahl von 2 bis 22 ist;
- m eine ganze Zahl von 0 bis 5 ist, und
- das Radikal R⁶ ausgewählt ist aus (a) einem Isocyanatradikal (-NCO), (b) dem Radikal R⁵ und (c) einer Gruppe der allgemeinen Strukturformel (II): 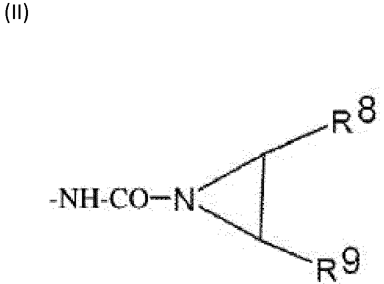
wobei die Radikale R⁸ und R⁹ gleich oder verschieden voneinander sein können und ausgewählt sind aus H und einem linearen oder verzweigtem C₁-C₄-Alkylradikal;
in der besagten Verbindung C mindestens zwei Radikale R⁶ vorhanden sind, die jeweils ein Radikal der allgemeinen Strukturformel (II) umfassen.

2. Die oligomerische Verbindung C gemäß Anspruch 1, wobei ein jegliches der Radikale R⁸ und R⁹ H ist und das andere Radikal von R⁸ bis R⁹ CH ist.

3. Die Verbindung C gemäß Anspruch 1 oder 2, wobei die Radikale R, R¹, R², R³ und R⁴ untereinander gleich sind und ein -(CH₂)₆-Radikal sind.

4. Die Verbindung C gemäß einem jeglichen der vorhergehenden Ansprüche, wobei R⁷ im Radikal R⁵ eine C₁-C₅-Alkylkette ist.

5. Die oligomerische Verbindung C gemäß einem jeglichen der vorhergehenden Ansprüche, wobei besagte Verbindung C in der Form einer Mischung von Oligomeren ist, die das Isocyanat-Trimer des Alkylen-C₁-C₁₀-α,ω-Diisocyanats einschließt, wobei das besagte Trimer in einer Menge von 40 bis 70 Gew.-% bezogen auf die gesamte Mischung von Oligomeren vorhanden ist.

6. Ein Verfahren zur Herstellung der Verbindung C gemäß einem jeglichen der vorhergehenden Ansprüche, umfassend mindestens die folgende Reaktion (I) aus den folgenden Reagenzien:
a) einem Aziridin, substituiert oder nicht-substituiert, wie oben definiert, und
b) einem Oligomer eines N,N',N"-Trialkyl-Isocyanurats, das mit der besagten hydrophilen Gruppe funktionalisiert ist;
wobei besagte Reaktion (I) in Anwesenheit eines polaren organischen Lösungsmittels und bei einer Temperatur von +20 bis +60 °C durchgeführt wird.

7. Das Verfahren gemäß dem vorhergehenden Anspruch, wobei die Reaktion (I) unter Verwendung eines molaren Verhältnisses zwischen den Reagenzien (a) und (b) im Bereich von 0,5:2 bis 2:0,5 durchgeführt wird.

8. Das Verfahren gemäß einem jeglichen der vorhergehenden Ansprüche 6 und 7, wobei das Lösungsmittel in einer Gewichtsmenge von 10% bis 50% der Gesamtgewichtsmenge der Gesamtheit der vorgenannten Reagenzien vorliegt.

9. Ein Gemisch M, erhalten gemäß einem jeglichen der vorhergehenden Ansprüche 6-8, zur Verwendung in einer Behandlung zur Zurichtung von Leder oder Kunstleder, Textilmaterial und Holz, wobei das besagte Gemisch die folgenden Komponenten in den folgenden Mengen (Gewichtsprozent) enthält:
I) von 55 bis 90, vorzugsweise von 85 bis 60, besonders bevorzugt von 65 bis 80, der besagten oligomerischen Verbindung C.
II) von 10 bis 45, vorzugsweise von 15 bis 40, besonders bevorzugt von 20 bis 35, des besagten polaren Lösungsmittels, und gegebenenfalls
III) von 0 bis 2 Reagenzien und/oder Reaktionsnebenprodukte.

10. Eine Endzusammensetzung F für Leder oder Kunstleder, Textilmaterial und Holz, wobei die oligomerische Verbindung C in einer Menge von 0,05 bis 9 Gew.-% bezogen auf das Gewicht der besagten Endzusammensetzung vorliegt.

## Revendications

1. Composé oligomérique fonctionnalisé C présentant la formule structurelle générale suivante (I) : 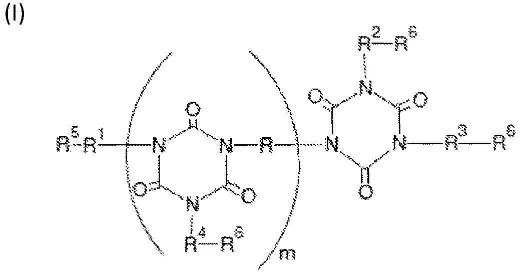 où :
- les radicaux R, R¹, R², R³ et R⁴ sont identiques ou différents les uns des autres et représentent un groupe alkylène C₁-C₁₀, de préférence C₅-C₈, l'alkylène étant de préférence une chaîne linéaire ;
- le radical R⁵ est un groupe NH-CO-O-(CH₂-CH₂-O)ₙ-R⁷, où le radical -O-(CH₂-CH₂-O)ₙ-R⁷ est un radical du monoéther d'alkyle du polyéthylène glycol (PEG) où R⁷ est une chaîne alkyle en C₁-C₈ monoéther d'alkyle et n est un nombre entier compris entre 2 et 22 ;
- m est un nombre entier choisi entre 0 et 5 et
- le radical R⁶ est choisi parmi (a) un radical isocyanate (-NCO), (b) ledit radical R⁵ et (c) un groupe de formule structurelle générale (II) : 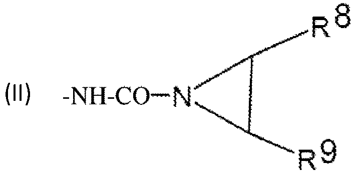
où les radicaux R⁸ et R⁹ peuvent être identiques ou différents l'un de l'autre et sont choisis parmi H et un radical alkyle linéaire ou ramifié en C₁-C₄ ;
dans ledit composé C, il y a au moins deux radicaux R⁶, chacun comprenant un radical de la formule structurelle générale (II).

2. Composé oligomérique C selon la revendication 1, dans lequel l'un des radicaux R⁸ et R⁹ est H et l'autre radical de R⁸ à R⁹ est CH₃.

3. Composé C selon la revendication1 ou 2, où les radicaux R, R¹, R², R³ et R⁴ sont identiques entre eux et sont un radical -(CH₂)₆-.

4. Composé C selon l'une des revendications précédentes, où R⁷ présent dans le radical R⁵ est une chaîne alkyle en C₁-C₅.

5. Composé C oligomérique selon l'une des revendications précédentes, où ledit composé C se présente sous la forme d'un mélange d'oligomères comprenant le trimère d'isocyanate de l'alkylène C₁-C₁₀-α,ω-diisocyanate, ledit trimère étant présent en une quantité de 40 à 70 % en poids par rapport à l'ensemble du mélange d'oligomères.

6. Procédé de production du composé C selon l'une des revendications précédentes, comprenant au moins la réaction (I) suivante à partir des réactifs suivants :
a) une aziridine, substituée ou non, telle que définie ci-dessus, et
b) un oligomère d'un N,N',N"-trialkyl-isocyanurate fonctionnalisé avec ledit groupe hydrophile ;
ladite réaction (I) étant conduit en presence d'un solvent organique polaire et à une température comprise entre +20 et +60 °C.

7. Procédé selon la revendication précédente, dans lequel la réaction (I) est conduite en utilisant un rapport molaire entre les réactifs (a) et (b) compris entre 0,5:2 et 2:0,5.

8. Procédé selon l'une des revendications précédentes 6 et 7, dans lequel le solvant est en une quantité en poids allant de 10 % à 50 % de la quantité en poids de l'ensemble des réactifs susmentionnés.

9. Mélange M obtenu selon l'une des revendications précédentes 6-8 pour utilisation dans un traitement de finition du cuir ou du similicuir, des matières textiles et du bois, ledit mélange comprenant les composants suivants dans les quantités suivantes (pourcentages en poids) :
I) de 55 à 90, de préférence de 85 à 60, plus préférentiellement de 65 à 80, dudit composé oligomérique C.
II) de 10 à 45, de préférence de 15 à 40, plus préférentiellement de 20 à 35, dudit solvant polaire, et éventuellement
III) de 0 à 2 de réactifs et/ou de sous-produits de réaction.

10. Composition de finition F pour le cuir ou le similicuir, le matériau textile et le bois, où le composé oligomérique C est en quantité de 0,05 à 9 % en poids par rapport au poids de ladite composition de finition.
